(19) Europäisches Patentamt
European Patent Office
Office européen des brevets

(11) EP 4 321 498 A1

(12) # EUROPEAN PATENT APPLICATION

(43) Date of publication:
**14.02.2024 Bulletin 2024/07**

(21) Application number: **22189690.5**

(22) Date of filing: **10.08.2022**

(51) International Patent Classification (IPC):
***C05G 3/90*** *(2020.01)*

(52) Cooperative Patent Classification (CPC):
**C05G 3/90**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SABIC Global Technologies B.V.**
**4612 PX Bergen op Zoom (NL)**

(72) Inventors:
- **VISWANATH, Vinu**
**23955 Thuwal (SA)**
- **PASHA, Farhan Ahmad**
**23955 Thuwal (SA)**
- **AL-HADHRAMI, Ahmed**
**23955 Thuwal (SA)**
- **BELLA, Ridha**
**11422 Riyadh (SA)**
- **ALBAHILY, Khalid**
**23955 Thuwal (SA)**
- **VIDJAYACOUMAR, Balamurugan**
**23955 Thuwal (SA)**

(74) Representative: **J A Kemp LLP**
**80 Turnmill Street**
**London EC1M 5QU (GB)**

(54) **TRIAZOLE METHANOL AS NITRIFICATION INHIBITOR FOR FERTILIZER APPLICATION**

(57) Disclosed is a nitrification inhibitor composition and method for inhibiting the nitrification of ammonia in soil. Methods of making the nitrification inhibitor are also disclosed.

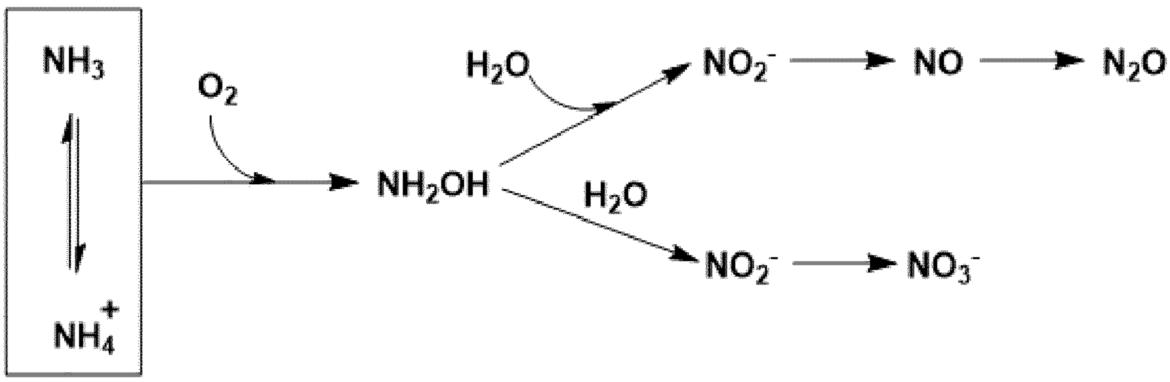


Prior Art

FIG. 1

EP 4 321 498 A1

## Description

## BACKGROUND OF THE INVENTION

### I. Field of the Disclosure

This disclosure generally concerns compositions for maintaining or reducing the loss of nitrogen content in soils.

### II. Background

Nitrogen is one of the most important nutrients for plant growth and productivity. Nitrogen-use efficiency (NUE) is defined as the ratio of a crop's nitrogen uptake to the total input of nitrogen fertilizer. In agricultural crops, NUE is notoriously poor, with about 50% of nitrogenous fertilizer applied to crop systems lost to the environment as ammonia ($NH_3$), nitrate ($NO_3^-$), and nitrous oxide ($N_2O$, a greenhouse gas). Low NUE in the agriculture industry contributes to high agricultural production costs, environmental pollution, and climate change. These losses are driven by nitrification and subsequent denitrification processes catalyzed by soil microorganisms.

Nitrification is traditionally considered to be a two-step process where ammonia ($NH_3$) is first oxidized to nitrite ($NO_2^-$) by ammonia oxidizers, and subsequently to nitrate ($NO_3^-$) by nitrite-oxidizing bacteria (NOB). Recent evidence indicates complete nitrification by *Nitrospira* bacteria that are present in natural soil environments.

Various governments throughout the world have imposed regulations that obligate the agricultural industry to reduce their environmental impacts. One method for reducing agricultural environmental impact involves the use of nitrification inhibitors. Nitrification inhibitors are compounds that can prevent or retard the nitrification of ammonia. These inhibitors help to reduce losses of nitrogen in soil that would otherwise be used by plants.

Some plants develop nitrification inhibition naturally through root exudates termed Biological Nitrification Inhibitors (BNIs). These natural compounds include 2-hydroxy-5-methoxy-1,4-benzoquinone (Sorgoleone), methyl-3-(4-hydroxyphenyl)propionate, and 1,9-decanediol. Fertilizer research has led to the development of synthetic nitrification inhibitors (NIs), including nitrapyrin, dicyandiamide (DCD), and 3, 4-dimethylpyrazole phosphate (DMPP). The biological and synthetic nitrification inhibitors are associated with a variety of shortcomings, including instability at high temperatures, instability at high or low pH, variable effectiveness, difficulties in application, high cost, environmental pollution, and food safety risks. Therefore, there exist an unmet need to identify novel, non-toxic nitrification inhibitors that can be effective over broad ranges of soil types, pH, and temperature.

## SUMMARY OF THE INVENTION

A solution to at least some of the problems discussed above is disclosed herein. The solution in some instances lies in nitrification inhibitors disclosed herein and methods for synthesizing the nitrification inhibitors. The nitrification inhibitors disclosed herein can include small molecules that can, in some instances, be synthesized in a single step using relatively inexpensive reagents. The nitrification inhibitors, in some instances, have a high melting point, which facilitates formulating the nitrification inhibitors with melted urea at a temperature of about 132 to 135 °C or greater. The nitrification inhibitors exhibit little to no toxicity and are equally or more effective than nitrification inhibitors currently on the market. The nitrification inhibitors can be used in a variety of soil types, and over broad ranges of temperature and pH. Certain aspects of the disclosure are therefore directed to a composition that provides reduced nitrification of ammonium nitrogen, the composition comprising a nitrification inhibitor of formula I:

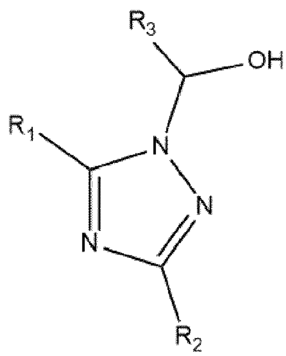

(I)

wherein $R_1$, $R_2$, and $R_3$ are each independently H, substituted or unsubstituted alkyl, or substituted or unsubstituted

aryl, or a salt thereof. In some aspects, $R_1$ is H. In further aspects, $R_2$ is H. In some aspects, $R_3$ is H. In some aspects, the nitrification inhibitor is further defined as formula I:

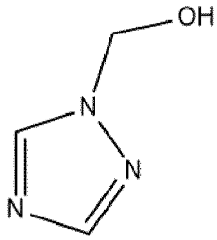

(II).

Some aspects of the disclosure are directed to a method for inhibiting the nitrification of ammonia in soil comprising applying to the soil a composition comprising a nitrification inhibitor of formula I. The nitrification inhibitor may be applied to the soil by application directly to the soil, by tilling into a soil, by application to water that contacts the soil, etc. In some instances, the nitrification inhibitor is applied to the soil at the same time as, or at a different time than, a fertilizer, water, additional soil, a soil supplement, a seed, a plant, etc.

The composition, in some instances, can consist or consist essentially of the nitrification inhibitor. In some aspects, the composition further comprises at least one nitrogenous fertilizer component. The at least one nitrogenous fertilizer component can be selected from the group consisting of urea, an ammonium salt, anhydrous ammonia, and combinations thereof. In specific aspects, the at least one nitrogenous fertilizer components is urea. In some embodiments, the urea is a solidified urea melt. In some aspects, the composition further comprises a phosphate based fertilizer. In some aspects, the nitrification inhibitor is comprised within the solidified urea melt.

In some aspects, the composition further comprises at least one additional nitrification inhibitor. The at least one additional nitrification inhibitor can be nitrapyrin, dicyandiamide, ammonium thiosulfate, methyl-3-(4-hydroxyphenyl)propionate, 1,9-decanediol, potassium azide, 2-amino-4-chloro-6-methylpyrimidine, sulfathiazole, 4-amino-1,2,4-triazole, 2,4-diamino-6-trichloromethyl-s-triazine, potassium ethylxanthate, guanylthiourea, 4-nitrobenzotrichloride, 4-mesylbenzotrichloride, sodium thiocarbonate, phenylmercuric acetate, 3, 4-dimethylpyrazole phosphate, or sorgoleone, or combinations thereof. In some aspects, the composition further comprises at least one urease inhibitor. The at least one urease inhibitor may be at least one of N-(n-butyl) thiophosphoric triamide (NBTPT) and N-(n-propyl) thiophosphoric triamide. In some aspects, the composition further comprises at least one additional nitrification inhibitor and at least one urease inhibitor.

In some aspects, the nitrification inhibitor is comprised within a carrier. In some aspects, the carrier comprises plaster of paris, flour, chalk powder, starch, gluten, kaolin, bentonite, colloidal silica, silica, dried distillers grains with solubles, lignin, a synthetic polymer, a wax, chitin, glycoaminoglycans, pectins, hyaluronic acid, chondroitin sulphate, dermatan sulphate, alginic acid, polymannuronic acid, polyguluronic acid, polyglucuronic acid, amylose, amylopectin, callose, chitosan, poly- galactomannan, dextran, xanthan, keratan sulphate, MgO, CaO, bone mill powder, rice husk, CaCO3, $Na_2CO_3$, $K_2CO_3$, $KH_2PO_4$, $NaHCO_3$, and/or $MgCO_3$. In some embodiments, the synthetic polymer comprises poly butylene succinate adipate, poly lactic acid, poly butylene succinate, cellulose triacetate, cellulose diacetate, cellulose acetate, a starch acetate, poly(caprolactone), a poly(butylene terephthalate adipate), hydroxypropyl methylcellulose, hydroxyethyl methylcellulose, methylcellulose, ethylcellulose, ethyl methyl cellulose, hydroxy ethyl cellulose, hydroxypropyl cellulose, ethyl hydroxyethyl cellulose, carboxymethyl cellulose, polyethylene glycol, cyclodextrin, or a combination thereof.

In some aspects, the composition increases nitrogen use efficiency (NUE) of or for a crop. In some aspects, the method further comprises applying a nitrogenous fertilizer component to the soil, wherein the nitrogenous fertilizer component and the composition are comprised in two separate compositions. In certain aspects, the two separate compositions are applied to the soil within one hour of each other. In other aspects, the two separate compositions are applied to the soil separately and not within one hour of each other. In other aspects, the nitrogenous fertilizer component and the nitrification inhibitor are comprised in a single composition.

Also disclosed are the following aspects 1 to 56 of the present invention.

Aspect 1 is a method for inhibiting the nitrification of ammonia in soil comprising applying to the soil a composition comprising a nitrification inhibitor of formula I:

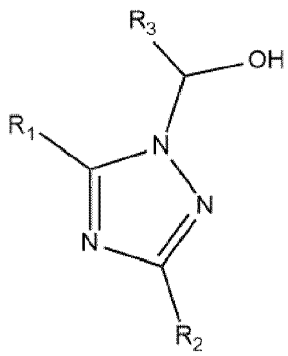

(I)

wherein $R_1$, $R_2$, and $R_3$ are each independently H, substituted or unsubstituted alkyl, or substituted or unsubstituted aryl, or a salt thereof.

Aspect 2 is the method of aspect 1, wherein the composition further comprises at least one nitrogenous fertilizer component.

Aspect 3 is the method of aspect 2, wherein the at least one nitrogenous fertilizer component is selected from the group consisting of urea, an ammonium salt, anhydrous ammonia, and combinations thereof.

Aspect 4 is the method of any of aspects 1 to 3, wherein the composition further comprises at least one additional nitrification inhibitor.

Aspect 5 is the method of any one of aspects 1 to 4, wherein the at least one additional nitrification inhibitor is selected from the group consisting of nitrapyrin, dicyandiamide, ammonium thiosulfate, methyl-3-(4-hydroxyphenyl)propionate, 1,9-decanediol, potassium azide, 2-amino-4-chloro-6-methylpyrimidine, sulfathiazole, 4-amino-1,2,4-triazole, 2,4-diamino-6-trichloromethyl-s-triazine, potassium ethylxanthate, guanylthiourea, 4-nitrobenzotrichloride, 4-mesylbenzotrichloride, sodium thiocarbonate, phenylmercuric acetate, 3, 4-dimethylpyrazole phosphate, sorgoleone, and combinations thereof.

Aspect 6 is the method of any one of aspects 1 to 5, wherein the composition further comprises at least one urease inhibitor.

Aspect 7 is the method of aspect 6, wherein the at least one urease inhibitor is at least one of N-(n-butyl) thiophosphoric triamide and N-(n-propyl) thiophosphoric triamide.

Aspect 8 is the method of any one of aspects 1 to 7, wherein the composition increases a crop's nitrogen use efficiency (NUE).

Aspect 9 is the method of any one of aspects 1 to 8, wherein the method further comprises applying a nitrogenous fertilizer component to the soil, wherein the nitrogenous fertilizer component and the composition are comprised in two separate compositions.

Aspect 10 is the method of aspect 9, wherein the two separate compositions are applied to the soil within one hour of each other.

Aspect 11 is the method of aspect 9, wherein the two separate compositions are applied to the soil separately and not within one hour of each other.

Aspect 12 is the method of any one of aspects 1 to 11, wherein $R_1$ is H.

Aspect 13 is the method of any one of aspects 1 to 12, wherein $R_2$ is H.

Aspect 14 is the method of any one of aspects 1 to 13, wherein $R_3$ is H.

Aspect 15 is the method of any one of aspects 1 to 14, wherein the nitrification inhibitor is further defined as a nitrification inhibitor of formula II:

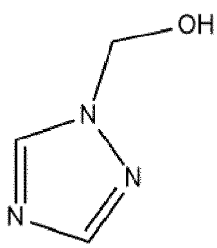

(II).

Aspect 16 is the method of any one of aspects 2 to 15, wherein the nitrogenous fertilizer component is urea.

Aspect 17 is the method of aspect 16, wherein the urea is a solidified urea melt.

Aspect 18 is the method of aspect 17, wherein the nitrification inhibitor is comprised within the solidified urea melt.

Aspect 19 is the method of any one of aspects 1 to 18, wherein the nitrification inhibitor is comprised within a carrier.

Aspect 20 is the method of aspect 19, wherein the carrier comprises plaster of paris, flour, chalk powder, starch, gluten, kaolin, bentonite, colloidal silica, silica, dried distillers grains with solubles, lignin, a synthetic polymer, a wax, chitin, glycoaminoglycans, pectins, hyaluronic acid, chondroitin sulphate, dermatan sulphate, alginic acid, polymannuronic acid, polyguluronic acid, polyglucuronic acid, amylose, amylopectin, callose, chitosan, poly- galactomannan, dextran, xanthan, keratan sulphate, MgO, CaO, bone mill powder, rice husk, CaCO3, $Na_2CO_3$, $K_2CO_3$, $KH_2PO_4$, $NaHCO_3$, and/or $MgCO_3$.

Aspect 21 is the method of claim 20, wherein the synthetic polymer comprises poly butylene succinate adipate, poly lactic acid, poly butylene succinate, cellulose triacetate, cellulose diacetate, cellulose acetate, a starch acetate, poly(caprolactone), a poly(butylene terephthalate adipate), hydroxypropyl methylcellulose, hydroxyethyl methylcellulose, methylcellulose, ethylcellulose, ethyl methyl cellulose, hydroxy ethyl cellulose, hydroxypropyl cellulose, ethyl hydroxyethyl cellulose, carboxymethyl cellulose, cyclodextrin, polyethylene glycol, or a combination thereof.

Aspect 22 is a fertilizer composition that provides reduced nitrification of ammonium nitrogen comprising:

at least one nitrogen (N), phosphorus (P), and/or potassium (K) fertilizer component; and
a nitrification inhibitor of formula I:

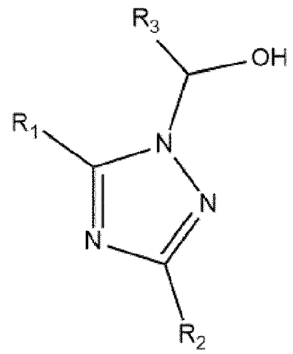

(I)

wherein $R_1$, $R_2$, and $R_3$ are each independently H, substituted or unsubstituted alkyl, or substituted or unsubstituted aryl, or a salt thereof.

Aspect 23 is the fertilizer composition of aspect 22, wherein the composition further comprises at least one additional nitrification inhibitor.

Aspect 24 is the fertilizer composition of aspect 23, wherein the at least one additional nitrification inhibitor is selected from the group consisting of nitrapyrin, dicyandiamide, ammonium thiosulfate, methyl-3-(4-hydroxyphenyl)propionate, 1,9-decanediol, potassium azide, 2-amino-4-chloro-6-methylpyrimidine, sulfathiazole, 4-amino-1,2,4-triazole, 2,4-diamino-6-trichloromethyl-s-triazine, potassium ethylxanthate, guanylthiourea, 4-nitrobenzotrichloride, 4-mesylbenzotrichloride, sodium thiocarbonate, phenylmercuric acetate, 4-dimethylpyrazole phosphate, sorgoleone, and combinations thereof.

Aspect 25 is the fertilizer composition of any one of aspects 22 to 24, wherein the composition further comprises at least one urease inhibitor.

Aspect 26 is the fertilizer composition of aspect 25, wherein the ammonia source is ammonium hydroxide ($NH_4OH$) and/or ammonia ($NH_3$).

Aspect 27 is the fertilizer composition of any one of aspects 22 to 26, wherein the nitrification inhibitor is comprised on the surface of the at least one N, P, and/or K fertilizer component.

Aspect 28 is the fertilizer composition of any one of aspects 22 to 26, wherein the composition comprises an essentially homogeneous mixture of the nitrification inhibitor and the at least one of a N, P, and/or K fertilizer component.

Aspect 29 is the fertilizer composition of any one of aspects 22 to 28, wherein $R_1$ is H.

Aspect 30 is the fertilizer composition of any one of aspects 22 to 29, wherein $R_2$ is H.

Aspect 31 is the fertilizer composition of any one of aspects 22 to 30, wherein $R_3$ is H.

Aspect 32 is the fertilizer composition of any one of aspects 22 to 31, wherein the nitrification inhibitor is further defined as a nitrification inhibitor of formula II:

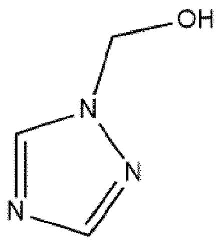

(II).

Aspect 33 is the fertilizer composition of any one of aspects 22 to 32, wherein the at least one N, P, and/or K fertilizer component comprises urea.

Aspect 34 is the fertilizer composition of aspect 33, wherein the nitrification inhibitor is comprised within a solidified urea melt.

Aspect 35 is the fertilizer composition of any one of aspects 22 to 34, wherein the nitrification inhibitor is comprised within a carrier.

Aspect 36 is the fertilizer composition of aspect 35, wherein the carrier comprises plaster of paris, flour, chalk powder, starch, gluten, kaolin, bentonite, colloidal silica, silica, dried distillers grains with solubles, lignin, a synthetic polymer, a wax, chitin, glycoaminoglycans, pectins, hyaluronic acid, chondroitin sulphate, dermatan sulphate, alginic acid, polymannuronic acid, polyguluronic acid, polyglucuronic acid, amylose, amylopectin, callose, chitosan, poly-galactomannan, dextran, xanthan, keratan sulphate, MgO, CaO, bone mill powder, rice husk, $CaCO_3$, $Na_2CO_3$, $K_2CO_3$, $KH_2PO_4$, $NaHCO_3$, and/or $MgCO_3$.

Aspect 37 is the composition of aspect 36, wherein the synthetic polymer comprises poly butylene succinate adipate, poly lactic acid, poly butylene succinate, cellulose triacetate, cellulose diacetate, cellulose acetate, a starch acetate, poly(caprolactone), a poly(butylene terephthalate adipate), hydroxypropyl methylcellulose, hydroxyethyl methylcellulose, methylcellulose, ethylcellulose, ethyl methyl cellulose, hydroxy ethyl cellulose, hydroxypropyl cellulose, ethyl hydroxyethyl cellulose, carboxymethyl cellulose, cyclodextrin, polyethylene glycol, or a combination thereof.

Aspect 38 is a composition comprising:
a nitrification inhibitor of formula I:

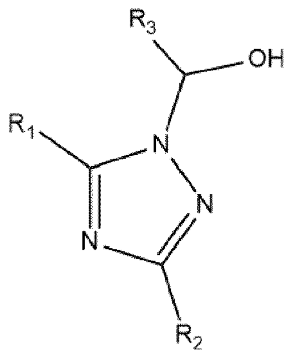

(I)

wherein $R_1$, $R_2$, and $R_3$ are each independently H, substituted or unsubstituted alkyl or substituted or unsubstituted aryl, or a salt thereof; and
an additional inhibitor comprising a urease inhibitor and/or an additional nitrification inhibitor.

Aspect 39 is the composition of aspect 38, wherein the additional inhibitor comprises the urease inhibitor.

Aspect 40 is the composition of aspect 39, wherein the urease inhibitor is selected from the group consisting of N-(n-butyl) thiophosphoric triamide and N-(n-propyl) thiophosphoric triamide and combinations thereof.

Aspect 41 is the composition of any one of aspects 38 to 40, wherein the additional inhibitor comprises the additional nitrification inhibitor.

Aspect 42 is the composition of aspect 41, wherein the nitrification inhibitor is selected from the group consisting of nitrapyrin, dicyandiamide, ammonium thiosulfate, methyl-3-(4-hydroxyphenyl)propionate, 1,9-decanediol, potassium azide, 2-amino-4-chloro-6-methylpyrimidine, sulfathiazole, 4-amino-1,2,4-triazole, 2,4-diamino-6-trichloromethyl-s-triazine, potassium ethylxanthate, guanylthiourea, 4-nitrobenzotrichloride, 4-mesylbenzotrichloride, sodium thiocarbonate, phenylmercuric acetate, 3, 4-dimethylpyrazole phosphate, and sorgoleone, and combinations thereof.

Aspect 43 is the composition of any one of aspects 38 to 42, further comprising a carrier.

Aspect 44 is the composition of aspect 43, wherein the carrier comprises plaster of paris, flour, chalk powder, starch, gluten, kaolin, bentonite, colloidal silica, silica, dried distillers grains with solubles, lignin, a synthetic polymer, a wax, chitin, glycoaminoglycans, pectins, hyaluronic acid, chondroitin sulphate, dermatan sulphate, alginic acid, polymannuronic acid, polyguluronic acid, polyglucuronic acid, amylose, amylopectin, callose, chitosan, poly-galactomannan, dextran, xanthan, keratan sulphate, MgO, CaO, bone mill powder, rice husk, $CaCO_3$, $Na_2CO_3$, $K_2CO_3$, $KH_2PO_4$, $NaHCO_3$, and/or $MgCO_3$.

Aspect 45 is the composition of aspect 44, wherein the synthetic polymer comprises poly butylene succinate adipate, poly lactic acid, poly butylene succinate, cellulose triacetate, cellulose diacetate, cellulose acetate, a starch acetate, poly(caprolactone), a poly(butylene terephthalate adipate), hydroxypropyl methylcellulose, hydroxyethyl methylcellulose, methylcellulose, ethylcellulose, ethyl methyl cellulose, hydroxy ethyl cellulose, hydroxypropyl cellulose, ethyl hydroxyethyl cellulose, carboxymethyl cellulose, cyclodextrin, polyethylene glycol, or a combination thereof.

Aspect 46 is the composition of any one of aspects 38 to 45, wherein $R_1$ is H.

Aspect 47 is the composition of any one of aspects 38 to 46, wherein $R_2$ is H.

Aspect 48 is the composition of any one of aspects 38 to 47, wherein $R_3$ is H.

Aspect 49 is the composition of any one of aspects 38 to 48 wherein the nitrification inhibitor is further defined as a nitrification inhibitor of formula II:

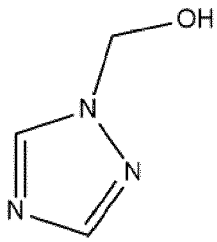

(II).

Aspect 50 is a composition comprising:

a nitrification inhibitor of formula I:

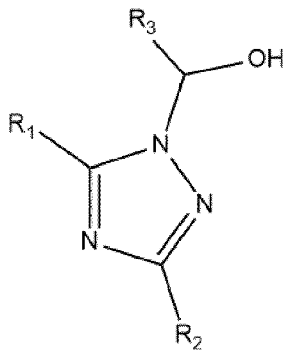

(I)

wherein $R_1$, $R_2$, and $R_3$ are each independently H, substituted or unsubstituted alkyl or substituted or unsubstituted aryl, or a salt thereof; and

a solid carrier.

Aspect 51 is the composition of aspect 50, wherein the solid carrier comprises plaster of paris, flour, chalk powder, starch, gluten, kaolin, bentonite, colloidal silica, silica, dried distillers grains with solubles, lignin, a synthetic polymer, a wax, chitin, glycoaminoglycans, pectins, hyaluronic acid, chondroitin sulphate, dermatan sulphate, alginic acid, polymannuronic acid, polyguluronic acid, polyglucuronic acid, amylose, amylopectin, callose, chitosan, poly-galactomannan, dextran, xanthan, keratan sulphate, MgO, CaO, bone mill powder, rice husk, $CaCO_3$, $Na_2CO_3$, $K_2CO_3$, $KH_2PO_4$, $NaHCO_3$, and/or $MgCO_3$.

Aspect 52 is the composition of aspect 51, wherein the synthetic polymer comprises poly butylene succinate adipate, poly lactic acid, poly butylene succinate, cellulose triacetate, cellulose diacetate, cellulose acetate, a starch acetate, poly(caprolactone), a poly(butylene terephthalate adipate), hydroxypropyl methylcellulose, hydroxyethyl methylcellulose, methylcellulose, ethylcellulose, ethyl methyl cellulose, hydroxy ethyl cellulose, hydroxypropyl cellulose, ethyl hydroxyethyl cellulose, carboxymethyl cellulose, cyclodextrin, polyethylene glycol, or a combination thereof.

Aspect 53 is the composition of any one of aspects 50 to 52, wherein $R_1$ is H.

Aspect 54 is the composition of any one of aspects 50 to 53, wherein $R_2$ is H.

Aspect 55 is the composition of any one of aspects 50 to 54, wherein $R_3$ is H.

Aspect 56 is the composition of any one of aspects 50 to 55 wherein the nitrification inhibitor is further defined as a nitrification inhibitor of formula II:

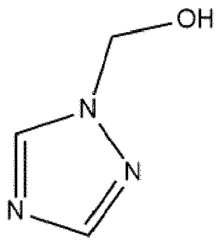

(II).

The term "nitrification inhibitor" is a compound that inhibits bacteria in soil from converting nitrogen, such as the nitrogen provided in a fertilizer compound, into nitrate.

The term "urease inhibitor" is a compound that inhibits activity of the enzyme urease, an enzyme which converts urea into ammonia.

The term "fertilizer" is defined as a material applied to soils or to plant tissues to supply one or more plant nutrients essential or beneficial to the growth of plants and/or stimulants or enhancers to increase or enhance plant growth.

The term "granule" can include a solid material. A granule can have a variety of different shapes, non-limiting examples of which include a spherical, a puck, an oval, a rod, an oblong, or a random shape.

The term "particle" can include a solid material less than a millimeter in its largest dimension.

The terms "particulate" or "powder" can include a plurality of particles.

The terms "about" or "approximately" as used herein are defined as being close to as understood by one of ordinary skill in the art. In one non-limiting embodiment, the terms are defined to be within 10%, preferably within 5%, more preferably within 1%, and most preferably within 0.5%.

The terms "wt. %," "vol.%," or "mol.%" refers to a weight, volume, or molar percentage of a component, respectively, based on the total weight, the total volume of material, or total moles, that includes the component. In a non-limiting example, 10 grams of component in 100 grams of the material is 10 wt. % of component.

The use of the word "a" or "an" when used in conjunction with the term "comprising" may mean "one," but it is also consistent with the meaning of "one or more," "at least one," and "one or more than one."

The phrase "and/or" means "and" or "or". To illustrate, A, B, and/or C includes: A alone, B alone, C alone, a combination of A and B, a combination of A and C, a combination of B and C, or a combination of A, B, and C. In other words, "and/or" operates as an inclusive or.

The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The compositions and methods for their use can "comprise," "consist essentially of," or "consist of' any of the ingredients or steps disclosed throughout the specification. Compositions and methods "consisting essentially of' any of the ingredients or steps disclosed limits the scope of the claim to the specified materials or steps which do not materially affect the basic and novel characteristic of the claimed invention.

It is contemplated that any embodiment discussed in this specification can be implemented with respect to any method or composition of the invention, and vice versa. Furthermore, compositions of the invention can be used to achieve methods of the invention.

Other objects, features and advantages of the present invention will become apparent from the following detailed description. It should be understood, however, that the detailed description and the specific examples, while indicating specific embodiments of the invention, are given by way of illustration only, since various changes and modifications within the spirit and scope of the invention will become apparent to those skilled in the art from this detailed description.

## BRIEF DESCRIPTION OF THE DRAWINGS

The following drawings form part of the present specification and are included to further demonstrate certain aspects of the present invention. The invention may be better understood by reference to one or more of these drawings in combination with the detailed description of specific embodiments presented herein.

**FIG. 1:** Chemical pathway of ammonia to nitrate and $N_2O$.

**FIG. 2:** Active site of ammonium oxidase enzyme. FIG. 2A is a schematic depicting a purported ammonia oxidase copper metalloenzyme active site with two copper atoms. FIG. 2B is a ball and stick model of ammonia oxidase active site.

## DETAILED DESCRIPTION OF THE INVENTION

Human activity has had the single largest influence on the global nitrogen cycle by introducing unprecedented amounts of reactive nitrogen into ecosystems. The agricultural industry, in particular, is the single largest human activity that affects the global nitrogen-cycle. In agricultural systems, rapid and unchecked nitrification results in inefficient nitrogen-use by crops, leading to nitrogen-leakage and environmental pollution.

Nitrification is the process by which ammonia is converted to nitrites ($NO_2^-$), nitrates ($NO_3^-$), and nitrous oxide ($N_2O$) (FIG. 1). This process naturally occurs in the environment, where it is carried out by specialized bacteria. Most nitrification is performed by two groups of ammonia-oxidizing bacteria, *Nitrosomonas sp.* and *Nitrobacter spp.* These bacteria are generally ubiquitous components of soil microbial populations. Bacterial enzymes that are key to the nitrification process include ammonia monooxygenase, hydroxylamine dehydrogenase, and nitrite oxidoreductase. Inhibition of the nitrification enzyme ammonia monooxygenase, the first enzyme in the nitrification process, retards the conversion of $NH_4^+$ into $NH_2OH$, and slows fertilizer loss due to nitrification.

Certain aspects of the present disclosure are directed to compositions that inhibit the nitrification process, thereby increasing nitrogen longevity in soil. This is accomplished by applying one of more of the nitrification inhibitor compounds disclosed herein to a plant, soil, or crop. The nitrification inhibitors disclosed herein may be combined with an additional nitrification inhibitor and/or a urease inhibitor that inhibits the conversion of urea into ammonium and carbon dioxide. The nitrification inhibitors disclosed herein include small, low molecular weight organic compounds that have no chiral centers. These compounds are relatively inexpensive to synthesize and can be produced in large quantities at a fraction of the cost of other, more structurally-complex nitrification inhibitors.

### I. Nitrification Inhibitor

Certain embodiments herein concern a composition comprising a nitrification inhibitor of formula I:

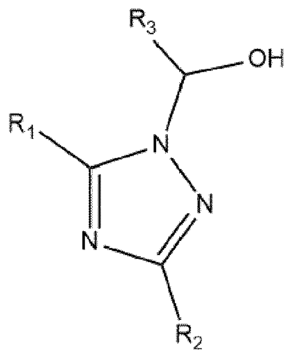

(I)

wherein $R_1$, $R_2$, and $R_3$ are each independently H, substituted or unsubstituted alkyl or substituted or unsubstituted aryl, or a salt thereof. The composition may further include at least one nitrogenous fertilizer component, at least one additional nitrification inhibitor, and/or at least one urease inhibitor. The nitrification inhibitors may be used to inhibit the nitrification of ammonia in soil by applying the composition to the soil.

In some aspects, a fertilizer nutrient can be included or excluded in the nitrification inhibitor composition. If included, fertilizer nutrients can be chosen based on the particular needs of certain types of soil, climate, or other growing conditions to maximize the efficacy of the fertilizer in enhancing plant growth and crop yield. Additional additives may also be included or excluded in the nitrification inhibitor composition. Non-limiting examples of additives that can be included or excluded from the nitrification inhibitor composition of the present invention include nitrogen nutrients, phosphorus nutrients, potassium nutrients, micronutrients, and/or secondary nutrients. The micronutrient can be copper, iron, chloride, manganese, molybdenum, or nickel, or any combinations thereof. The nitrogen nutrient can be urea, ammonium nitrate, ammonium sulfate, diammonium phosphate, monoammonium phosphate, urea-formaldehyde, ammonium chloride, and/or potassium nitrate. In some aspects, the secondary nutrients may include calcium, magnesium, and/or sulfur, such as lime and/or superphosphate.

In some instances, the nitrification inhibitor composition can include at least one additional nitrification inhibitor

and/or at least one urease inhibitor. Suitable nitrification inhibitors include, but are not limited to, 3,4-dimethylpyrazole phosphate (DMPP), dicyandiamide (DCD), thiourea (TU), 2-chloro-6-(trichloromethyl)-pyridine (Nitrapyrin), 5-ethoxy-3-trichloromethyl-1,2,4-thiadiazol, which is sold under the tradename Terrazole®, by OHP Inc., USA, 2-amino 4-chloro 6-methyl pyrimidine (AM), 2-mercaptobenzothiazole (MBT), or 2-sulfanilamidothiazole (ST), and any combination thereof. In one aspect, a nitrification inhibitor can comprise DMPP, DCD, TU, nitrapyrin, 5-ethoxy-3-trichloromethyl-1,2,4-thiadiazol, AM, MBT, or ST, or a combination thereof. In some embodiments, a fertilizer composition can comprise NBTPT, DMPP, TU, DCD, PPDA, nitrapyrin, 5-ethoxy-3-trichloromethyl-1,2,4-thiadiazol, AM, MBT, ST, or a combination thereof.

In some instances, a binder may be included in the nitrification inhibitor composition. Exemplary binders include a phosphate, a polyphosphate, a biodegradable polymer, or a wax, or a combination thereof. Suitable waxes include, but are not limited to, vegetable waxes, high melt waxes, ethylene bis(stearamide) wax, paraffin waxes, polyethylene based waxes, and olefin waxes. Suitable phosphates include, but are not limited to, diammonium phosphate, and monoammonium phosphate. Suitable polyphosphates include, but are not limited to, ammonium polyphosphate. Suitable biodegradable polymers include, but are not limited to, polyacrylamide, polyacrylic acid, polyacrylonitrile, biodegradable polylactic acid and other biodegradable polymeric material such as polylactic acid, poly(3-hydroxypropionic acid), polyvinyl alcohol, polyethylene glycol, poly e-caprolactone, poly L-lactide, poly butylene succinate, and biodegradable starch based polymers. The binder can include plaster of Paris, flour, starch, gluten, kaolin, bentonite, colloidal silica, a cyclodextrin, or combinations thereof. Suitable flours include, but are not limited to, rice flour, wheat flour, and bleached wheat flour. Suitable starches include, but are not limited to, dextrin modified starches.

In some instances, the nitrification inhibitor composition can include a pH buffer. Exemplary pH buffers include MgO, $KH_2PO_4$, $NaHCO_3$, chalk powder, aluminum, magnesium hydroxide, aluminum hydroxide/magnesium hydroxide co-precipitate, aluminum hydroxide/sodium bicarbonate co-precipitate, calcium acetate, calcium bicarbonate, calcium borate, calcium carbonate, calcium bicarbonate, calcium citrate, calcium gluconate, calcium hydroxide, dibasic sodium phosphate, dipotassium hydrogen phosphate, dipotassium phosphate, disodium hydrogen phosphate, magnesium acetate, magnesium borate, magnesium bicarbonate, magnesium carbonate, magnesium hydroxide, magnesium lactate, magnesium oxide, magnesium phosphate, magnesium silicate, magnesium succinate, magnesium tartrate, potassium acetate, potassium carbonate, potassium bicarbonate, potassium borate, potassium citrate, potassium metaphosphate, potassium phthalate, potassium phosphate, potassium polyphosphate, potassium pyrophosphate, potassium succinate, potassium tartrate, sodium acetate, sodium bicarbonate, sodium borate, sodium carbonate, sodium citrate, sodium gluconate, sodium hydrogen phosphate, sodium hydroxide, sodium lactate, sodium phthalate, sodium phosphate, sodium polyphosphate, sodium pyrophosphate, sodium tartrate, sodium tripolyphosphate, synthetic hydrotalcite, tetrapotassium pyrophosphate, tetrasodium pyrophosphate, tripotassium phosphate, trisodium phosphate, and trometamol, and combinations thereof.

The nitrification inhibitor composition described herein can be comprised in a composition useful for application to soil. In some aspects, in addition to the nitrification inhibitor composition described herein, the composition may include fertilizer compounds, micronutrients, primary nutrients, urea, nitrogen nutrients, insecticides, herbicides, or fungicides, or combinations thereof. The nitrification inhibitor composition described herein can also be included in a blended composition comprising fertilizers. The fertilizer can be urea, monoammonium phosphate (MAP), diammonium phosphate (DAP), muriate of potash (MOP), monopotassium phosphate (MKP), triple super phosphate (TSP), rock phosphate, single super phosphate (SSP), ammonium sulfate, and the like.

A nitrification inhibitor composition formed into a granule can have desirable physical properties such as desired levels of abrasion resistance, granule strength, pelletizability, hygroscopicity, granule shape, and size distribution. In some aspects, the nitrification inhibitor composition granule can have a crush strength above 1.5 kgf, such as above 1.8 kgf, such as 2 kgf to 6 kgf, or at least any one of, equal to any one of, or between any two of 2, 2.5, 3, 3.5, 4, 4.5, 5, 5.5, and 6 kgf. Bulk density of the fertilizer granules can be 1 g/cc to 1.2 g/cc, or at least any one of, at most any one of, equal to any one of, or between any two of 1, 1.02, 1.04, 1.06, 1.08, 1.1, 1.12, 1.14, 1.16, 1.18, and 1.2 g/cc. In some aspects, 10 mg or more, such as 10 mg to 40 mg, or at least any one of, at most any one of, equal to any one of, or between any two of 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, and 40 mg of the fertilizer granule can dissolve in 1 ml of water at a pH 7, under stirring at a rate 90 to 110 rpm, and at an ambient temperature, within 5 minutes of adding 100 mg of the fertilizer granules to the water. In some aspects, the fertilizer granule is capable of losing less than 0.13 wt. %, such as 0.02 % to 0.12 wt. %, or at most any one of, equal to any one of, or between any two of 0.02, 0.03, 0.04, 0.05, 0.06, 0.07, 0.08, 0.09, 0.1, 0.11, and 0.12 wt. % in an attrition loss test. Attrition loss can be measured using the following attrition loss test.

Attrition loss test: A plurality of sieved nitrification inhibitor granules with individual size 2 to 4 mm, and total volume 100 $cm^3$ is weighed (W1) and is placed into the test drum along with the 50 stainless steel balls having a total weight of 100 gm. The drum is closed and rotated for 10 min at 30 rpm. Then, the steel balls are separated from the sample and the material is screened over 2 mm sieve using a sieve shaker. The total weight of the granules over 2 mm are then re-weighed (W2). Results are calculated in terms of % weight loss using the formula:

$$\text{Weight loss due to attrition (wt. \%)} = \frac{\textit{weight of sample remained on 2 mm sieve } ((W2))}{\textit{intial weight of the sample } (W1)} \times 100$$

In some instances, the nitrification inhibitor composition can be extruded before drying. The extruder can extrude the nitrification inhibitor composition at pressures at least, at most, equal to, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, and 40 bar. The extruder can extrude the nitrification inhibitor composition at temperatures at least, at most, equal to, or between any two of -20, -15, -10, 0, 5, 10, 15, 20, 25, 30, 35, 40, 45 and 50 °C. The extrudate can be sliced or divided before drying, such as by a die.

In certain aspect, the desired size of a final nitrification inhibitor product, such as a granule, can be 0.5 to 5 mm, or 1 to 4 mm, and having a size lower than 0.5 mm or 1 mm, and/or having a size bigger than 4 mm or 5 mm can be obtained using one or more size screens. In certain aspects, the nitrification inhibitor composition can be rounded and/or spheronized in a spheronizer. In some instances, the nitrification inhibitor composition is contacted with a spheronizer for at least any one of, at most any one of, equal to any one of, or between any two of 5, 10, 15, 20, 25, 30, 35, 40, 50, or 60 seconds. The spheronizer in some instances has a rotating or rotatable disk capable of rotating at least any one of, at most any one of, equal to any one of, or between any two of 200, 500, 1000, 1500, 2000, 2500, 3000, 3500, 4000, 4500, 5000 rpm. In certain aspects, the nitrification inhibitor composition can be dried in a dryer at a temperature 40 °C to 85 °C, or at least any one of, at most any one of, equal to any one of, or between any two of 40, 45, 50, 55, 60, 65, 70, 75, 80 and 85 °C. In some aspects, the dryer can be a fluid bed dryer, drum dryer, or flash dryer. In some aspects, the nitrification inhibitor composition can be dried in the dryer with an hot air flow having a flow rate of at least any one of, at most any one of, equal to any one of, or between any two of 100, 150, 200, 250, 300, 350, 400, 450, and 500 $m^3$/hr and/or a rotation of at least any one of, at most any one of, equal to any one of, or between any two of 5, 10, 15, 20, 25, 30, 35, 40, 45, and 50 rpm.

## II. Methods of Using the Nitrification Inhibitor

The nitrification inhibitor, including nitrification inhibitor granules and compositions containing the nitrification inhibitor, can be used in methods of inhibiting the nitrification of ammonia in soil. Such methods can include applying to the soil an effective amount of a composition and/or blend containing the nitrification inhibitor of the present invention. The method may include increasing the growth and yield of crops, trees, ornamentals, etc., such as, for example, palm, coconut, rice, wheat, corn, barley, oats, and/or soybeans. The method can include applying the nitrification inhibitor of the present invention to at least one of a soil, an organism, a liquid carrier, a liquid solvent, etc. The composition(s) containing the nitrification inhibitor can be applied to plants and/or soil through any suitable method of application.

Non-limiting examples of plants that can benefit from the nitrification inhibitor of the present invention include vines, trees, shrubs, stalked plants, ferns, etc. The plants may include orchard crops, vines, ornamental plants, food crops, timber, and harvested plants. The plants may include Gymnosperms, Angiosperms, and/or Pteridophytes.

The effectiveness of compositions comprising the nitrification inhibitor of the present invention can be ascertained by analyzing nitrification activity as described below. It is understood that different soils have different characteristics, which can affect the effectiveness of the nitrification inhibitor compositions. The effectiveness of a nitrification inhibitor composition can also be directly compared to other nitrification inhibitor compositions by doing a side-by-side comparison in the same soil under the same conditions.

## Examples

The present invention will be described in greater detail by way of specific examples. The following examples are offered for illustrative purposes only, and are not intended to limit the invention in any manner. Those of skill in the art will readily recognize a variety of noncritical parameters which can be changed or modified to yield essentially the same results.

### Example I Molecular Modeling Study

A molecular modeling approach was used to predict the relative binding affinity of a compound of Formula I, as compared to nitrification inhibitors dicyandiamide (DCD) and 3,4-dimethylpyrazole phosphate (DMPP) in the active site of modelled ammonia monooxygenase enzyme, also known as nitrification enzyme (FIG. 2A). The crystal structure of ammonia monooxygenase is unknown, however, literature reveals information by homology modelling and other indirect approaches, which indicates that it is a copper metalloenzyme. Ammonia monooxygenase Cu site modelling shows two Cu(II) ions separated by 2.55 Å. The atoms of the $Cu_2S_2$ rhombus deviate from the plane by 0.2 Å, and the

angle between the two $CuS_2$ planes is 170.1°. Cu1 is bound to Met-A, His-A, and Cys-A from both chains in a distorted tetrahedral geometry, while Cu2 is bound to residues, Met-B, His-B, and Cys58-B from both chains, again in a distorted tetrahedral geometry (FIG. 2A). Both copper atoms depicted in FIG. 2A are in +1-oxidation states. In light of available information of the active site, density functional theory (DFT) modelling was used to examine ammonia monooxygenase active site geometry. The active site geometry was minimized (FIG. 2B) using B3LYP functional as implemented in the Gaussian 09 package in conjunction with 6-31G(d,p) basis sets for the nonmetal elements such as C, H, N, and O, while for metal Cu an effective core pseudopotentials (SDD) and the associated basis sets with a polarization function was used. An analytical frequency calculation verified all the stationary points. The Gibbs energies were computed at 298.15° K and at atmospheric pressure (unless specified otherwise), assuming an ideal gas behavior using unscaled harmonic vibrational frequencies obtained within the rigid rotor approximation.

A compound of Formula II candidate inhibitor and the commercial inhibitors DCD and DMPP (for benchmarking purpose) were introduced and the ligand receptor complex geometry minimized using DFT methods. The binding energies (BE) of the inhibitors within the active site were estimated using equation (1):

$$E_{binding} = Energy_{(Enzyme\text{-}Inhibitor\ complex)} - [Energy_{(Active\ site)} + Energy_{(Inhibitor)}] \text{ --- Eq (1)}$$

**Table 1 - Calculated DFT Binding Energies**

| **Candidate Ligand** | **Binding Energy ($E_{binding}$) ΔH kcal/mol** |
|---|---|
| 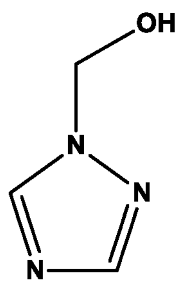 Formula II | -25.79 |
| **Benchmark Ligands** | **Binding Energy ($E_{binding}$) ΔH kcal/mol** |
| 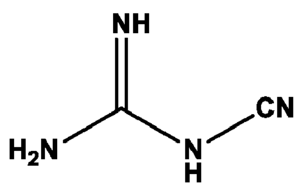 | -24.01 |
| 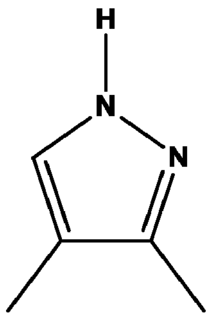 | -29.56 |

During competitive inhibition, an effective inhibitor molecule, with a higher binding energy within the enzyme active site, would have lower IC50 values. BE was estimated for candidate Formula II and benchmarks as reported in Table 1. The binding energies of Formula II was within close range of benchmarks, demonstrating that Formula II has comparable affinity for ammonia monooxygenase.

**Example II - Nitrification Inhibitor Synthesis**

Synthesis of (1H-1,2,4-triazole-1-yl)-methanol, compound of Formula II: 6.9 g. (0.1 mole) of 1,2,4-triazole, 3.0 g. (0.1 mole) of paraformaldehyde, and a catalytic amount of triethylamine were placed into a flask and the flask was immersed for 1 hour in an oil-bath maintained at 80-90 °C.

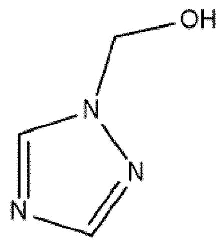

Formula II

The resulting solidified melt was recrystallized from acetone to yield 9.0 g of the Formula II compound. The yield was 91%. The identity of the Formula II compound was confirmed by $^1H$- & $^{13}C$- NMR and LC-MS analysis, and the data is in accordance with the literature. (Asian J. Chem. 2014, 26, 883-886).

**Example III - Nitrification Activity Analysis**

Crop soil and water were combined to form a sludge. The freshly-acquired sludge contained a high amount of nitrate nitrogen, therefore, the sludge was pretreated to reduce the chance of denitrification during analysis. Ethylene glycol was added to the sludge and the resulting sludge was purged with nitrogen gas for 24 hours to eliminate the nitrate nitrogen. After 24 hours, the sludge was aerated to eliminate the residual chemical oxygen demand (COD) which could be present. COD refers to the amount of oxygen required to degrade all oxidizable compounds in a measured sample.

A nitrification batch test was performed under nitrifying conditions. The activity of nitrification inhibitor Formula II compound was compared to that of the nitrification inhibitor dicyandiamide (DCD). COD and $NH_4$-N were added to the sludge with one of the Formula II compound or DCD. COD, $NH_4$-N, and $NO_3$-N concentrations were monitored over time (t = 0, 2, 4, 6, 8, 24 and 29 hours). The COD and $NH_4$-N removal was calculated from the analysis results. Glycol was included as a reference in the test.

The pH and oxygen content were also monitored during the tests. The pH level was kept between 7 and 8 at the beginning of the tests by adding IN HCl or IN NaOH. Oxygen was constantly purged into the sludge solutions throughout the test to get maximum aeration.

Table 2 includes the concentrations assessed for the five batch tests. A sample concentration of approximately 10% compared to the $NH_4$-N concentration was employed.

**Table 2**

| SOLUTIONS | COD DOSED (mg O2/l) | $NH_4$-N DOSED (mg/l) | SAMPLE WEIGHT (mg) | SAMPLE CONCENTRATION (mg/l) |
|---|---|---|---|---|
| DCD | 800 | 50 | 10.5 | 5.8 |
| Formula II compound | 800 | 50 | 13.7 | 7.6 |

The conversion results of COD, $NH_4$-N and $NO_3$-N for the reference and four samples are displayed in the tables below. Values shown in brackets are below the quantification limit and are indicative. Measurements taken at time = 0 were taken 60 seconds after mixing the sludge with the indicated substance. The nitrification process was nominal for both DCD and Formula II compound during the first 8 hours, then nitrification rates increased. The $NH_4$-N and $NO_3$-N concentrations were tested at 29 hours to verify that the nitrification process was still ongoing.

**Table 3 - DCD Results**

| TIME (hrs) | $NH_4$-N (mg/l) | $NO_3$-N (mg/l) | COD (mg $O_2$/l) |
|---|---|---|---|
| 0 | 45.9 | 8.6 | 757 |
| 2 | 43.0 | 5.5 | 558 |
| 4 | 39.4 | 8.9 | 360 |
| 6 | 39.7 | 7.4 | 190 |
| 8 | 33.2 | 7.3 | 121 |
| 24 | 9.9 | 39.0 | 48 |
| 29 | 4.0 | 47.2 | - |

**Table 4 - Formula II Compound Results**

| TIME (hrs) | $NH_4$-N (mg/l) | $NO_3$-N (mg/l) | COD (mg $O_2$/l) |
|---|---|---|---|
| 0 | 45.2 | 8.8 | 718 |
| 2 | 41.6 | 13.8 | 497 |
| 4 | 40.3 | 11.8 | 314 |
| 6 | 42.0 | 7.2 | 204 |
| 8 | 37.9 | < 2.3 (1.5) | 158 |
| 24 | 23.8 | 16.2 | 60 |
| 29 | 22.9 | 20.4 | - |

As demonstrated in Tables 3 and 4 above, both Formula II compound and DCD were effective at inhibiting the nitrification of the ammonia nitrogen ($NH_4$-N) in the sludge. Table 5 below shows that Formula II compound was more effective at inhibiting nitrification during the first 24 hours. Denitrification occurred even though the sludge was pretreated. This can likely be attributed to the high activity of bacteria contained within the sludge.

**Table 5 - $NH_4$-N Conversion Rates**

| Compound | Conversion Rate During First 24 Hours (mg $NH_4$-N/l·h) |
|---|---|
| DCD | 1.5 |
| Formula II compound | 0.9 |

All of the methods disclosed and claimed herein can be made and executed without undue experimentation in light of the present disclosure. While the compositions and methods of this invention have been described in terms of preferred embodiments, it will be apparent to those of skill in the art that variations may be applied to the methods and in the steps or in the sequence of steps of the method described herein without departing from the concept, spirit and scope of the invention. More specifically, it will be apparent that certain agents which are both chemically and physiologically related may be substituted for the agents described herein while the same or similar results would be achieved. All such similar substitutes and modifications apparent to those skilled in the art are deemed to be within the spirit, scope and concept of the invention as defined by the appended claims.

**Claims**

**1.** A method for inhibiting the nitrification of ammonia in soil comprising applying to the soil a composition comprising a nitrification inhibitor of Formula I:

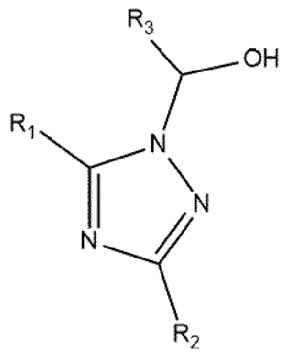

Formula I

wherein $R_1$, $R_2$, and $R_3$ are each independently H, substituted or unsubstituted alkyl, or substituted or unsubstituted aryl, or a salt thereof.

**2.** The method of claim 1, wherein the composition further comprises at least one nitrogenous fertilizer component.

**3.** The method of claim 2, wherein the at least one nitrogenous fertilizer component is selected from the group consisting of urea, an ammonium salt, anhydrous ammonia, and combinations thereof.

**4.** The method of any one of claims 1 to 3, wherein the composition further comprises at least one additional nitrification inhibitor.

**5.** The method of claim 4, wherein the at least one additional nitrification inhibitor is selected from the group consisting of nitrapyrin, dicyandiamide, ammonium thiosulfate, methyl-3-(4-hydroxyphenyl)propionate, 1,9-decanediol, potassium azide, 2-amino-4-chloro-6-methylpyrimidine, sulfathiazole, 4-amino-1,2,4-triazole, 2,4-diamino-6-trichloromethyl-s-triazine, potassium ethylxanthate, guanylthiourea, 4-nitrobenzotrichloride, 4-mesylbenzotrichloride, sodium thiocarbonate, phenylmercuric acetate, 3, 4-dimethylpyrazole phosphate, sorgoleone, and combinations thereof.

**6.** The method of any one of claims 1 to 5, wherein the composition further comprises at least one urease inhibitor.

**7.** The method of claim 6, wherein the at least one urease inhibitor is at least one of N-(n-butyl) thiophosphoric triamide and N-(n-propyl) thiophosphoric triamide.

**8.** The method of any one of claims 1 to 7, wherein the method increases a crop's nitrogen use efficiency (NUE).

**9.** The method of any one of claims 1 to 8, wherein the method further comprises applying a nitrogenous fertilizer component to the soil, wherein the nitrogenous fertilizer component and the composition are comprised in two separate compositions.

**10.** The method of any one of claims 1 to 9, wherein $R_1$ is H, $R_2$ is H, and/or $R_3$ is H.

**11.** The method of any one of claims 1 to 10, wherein the nitrification inhibitor is further defined as a compound of Formula II:

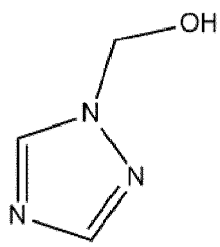

Formula II.

**12.** A composition comprising:

a nitrification inhibitor of Formula I:

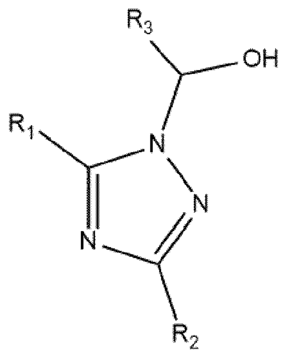

Formula I

wherein $R_1$, $R_2$, and $R_3$ are each independently H, substituted or unsubstituted alkyl, or substituted or unsubstituted aryl, or a salt thereof; and
one or more of:

an additional inhibitor comprising a urease inhibitor and/or an additional nitrification inhibitor;
a solid carrier; and/or
at least one nitrogen (N), phosphorus (P), and/or potassium (K) fertilizer component.

**13.** The fertilizer composition of claim 12, wherein:

the at least one additional nitrification inhibitor is selected from the group consisting of nitrapyrin, dicyandiamide, ammonium thiosulfate, methyl-3-(4-hydroxyphenyl)propionate, 1,9-decanediol, potassium azide, 2-amino-4-chloro-6-methylpyrimidine, sulfathiazole, 4-amino-1,2,4-triazole, 2,4-diamino-6-trichloromethyl-s-triazine, potassium ethylxanthate, guanylthiourea, 4-nitrobenzotrichloride, 4-mesylbenzotrichloride, sodium thiocarbonate, phenylmercuric acetate, 4-dimethylpyrazole phosphate, sorgoleone, and combinations thereof;
the at least one urease inhibitor is at least one of N-(n-butyl) thiophosphoric triamide and N-(n-propyl) thiophosphoric triamide;
the carrier comprises plaster of paris, flour, chalk powder, starch, gluten, kaolin, bentonite, colloidal silica, silica, dried distillers grains with solubles, lignin, a synthetic polymer, a wax, chitin, glycoaminoglycans, pectins, hyaluronic acid, chondroitin sulphate, dermatan sulphate, alginic acid, polymannuronic acid, polyguluronic acid, polyglucuronic acid, amylose, amylopectin, callose, chitosan, poly- galactomannan, dextran, xanthan, keratan sulphate, MgO, CaO, bone mill powder, rice husk, CaCO3, $Na_2CO_3$, $K_2CO_3$, $KH_2PO_4$, $NaHCO_3$, and/or $MgCO_3$; and/or
the at least one nitrogen (N), phosphorus (P), and/or potassium (K) fertilizer component comprises at least one nitrogenous fertilizer component.

**14.** The fertilizer composition of any one of claims 12 to 13, wherein $R_1$ is H, $R_2$ is H, and/or $R_3$ is H.

**15.** The fertilizer composition of any one of claims 12 to 14, wherein the nitrification inhibitor is further defined as a compound of Formula II:

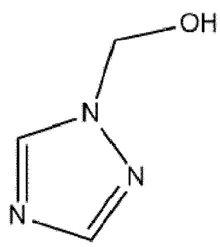

Formula II.

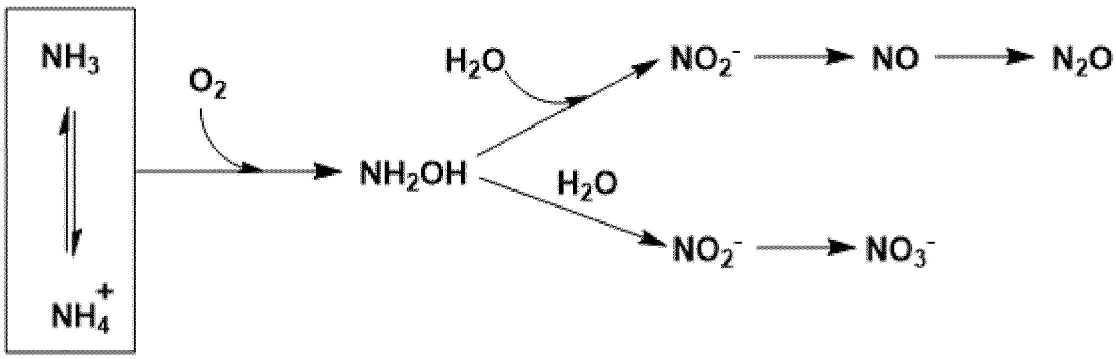


Prior Art

FIG. 1

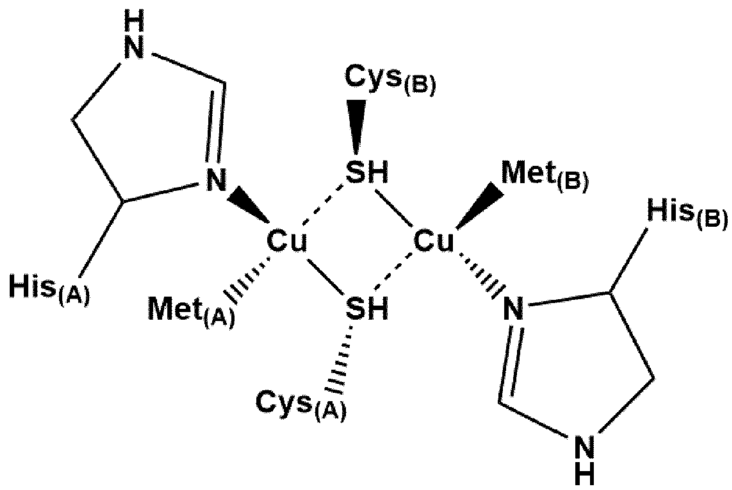

Prior Art

FIG. 2A

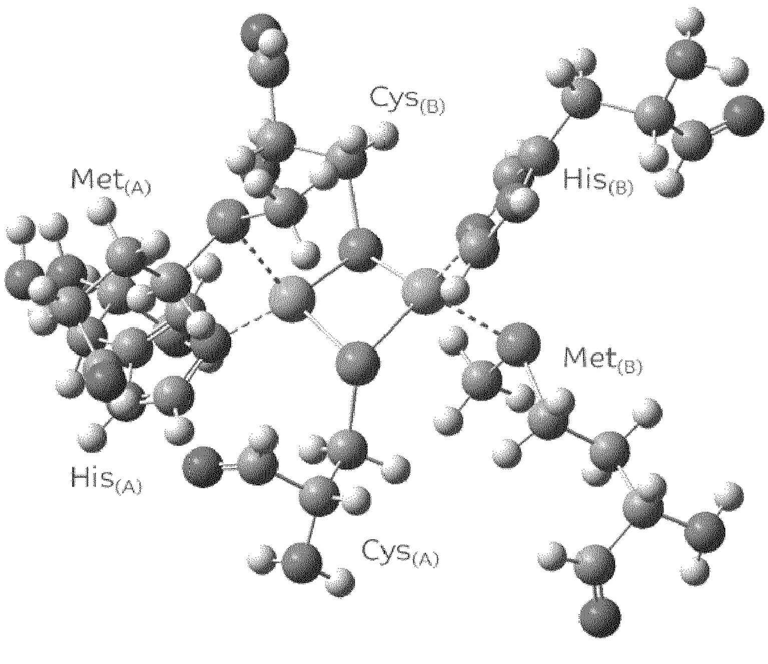

Prior Art

FIG. 2B

Europäisches Patentamt
European Patent Office
Office européen des brevets

# EUROPEAN SEARCH REPORT

Application Number
EP 22 18 9690

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 95/22515 A1 (PIESTERITZ STICKSTOFF [DE]; GRABARSE MARGRIT [DE] ET AL.) 24 August 1995 (1995-08-24) | 1-3,8-15 | INV. C05G3/90 |
| Y | * claim 1; example 5 * | 4-7 | |
| X | WO 99/58594 A1 (BASF AG [DE]; MOHR BERNHARD [DE] ET AL.) 18 November 1999 (1999-11-18) | 1-5,8-15 | |
| Y | * page 6, lines 13-38; claim 13 * | 6,7 | |
| X | DE 199 13 475 A1 (PIESTERITZ STICKSTOFF [DE]) 28 September 2000 (2000-09-28) | 1-3, 8-10, 12-14 | |
| Y | * paragraph [0030]; claim 1 * | 4-7 | |
| A | | 11,15 | |
| X | DE 10 2013 012498 A1 (PIESTERITZ STICKSTOFF [DE]) 29 January 2015 (2015-01-29) | 1-3,8-15 | |
| A | * claims 1, 4, 6, 11, 13 * | 4-7 | TECHNICAL FIELDS SEARCHED (IPC) |
| A | LINDELL S D ET AL: "Synthesis of inhibitors of imidazole glycerol phosphate dehydratase", BIOORGANIC & MEDICINAL CHEMISTRY LETTERS, ELSEVIER, AMSTERDAM NL, vol. 6, no. 5, 5 March 1996 (1996-03-05), pages 547-552, XP004135026, ISSN: 0960-894X, DOI: 10.1016/0960-894X(96)00076-5 * abstract; compounds 5-7, 14 and 15 * | 1-15 | C05G |
| Y | US 2018/208519 A1 (KANAGALINGAM SABESHAN [SA] ET AL) 26 July 2018 (2018-07-26) | 4-7 | |
| A | * paragraph [0146] - paragraph [0148]; claims 1, 2 * | 1-3,8-15 | |

The present search report has been drawn up for all claims

1

| Place of search | Date of completion of the search | Examiner |
|---|---|---|
| The Hague | 2 February 2023 | Kappen, Sascha |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 22 18 9690

This annex lists the patent family members relating to the patent documents cited in the above-mentioned European search report. The members are as contained in the European Patent Office EDP file on
The European Patent Office is in no way liable for these particulars which are merely given for the purpose of information.

02-02-2023

| Patent document cited in search report | Publication date | Patent family member(s) | Publication date |
|---|---|---|---|
| WO 9522515 A1 | 24-08-1995 | AT 195114 T | 15-08-2000 |
| | | AU 686344 B2 | 05-02-1998 |
| | | BG 61721 B1 | 30-04-1998 |
| | | BR 9506810 A | 30-09-1997 |
| | | CN 1149285 A | 07-05-1997 |
| | | CZ 291383 B6 | 12-02-2003 |
| | | DE 4405392 C1 | 19-10-1995 |
| | | DK 0746537 T3 | 04-09-2000 |
| | | EP 0746537 A1 | 11-12-1996 |
| | | ES 2148496 T3 | 16-10-2000 |
| | | FI 963255 A | 20-08-1996 |
| | | GR 3034156 T3 | 30-11-2000 |
| | | HU 214831 B | 29-06-1998 |
| | | JP 3977415 B2 | 19-09-2007 |
| | | JP H09509134 A | 16-09-1997 |
| | | KR 970701163 A | 17-03-1997 |
| | | NZ 281915 A | 27-05-1998 |
| | | PL 316028 A1 | 23-12-1996 |
| | | PT 746537 E | 30-11-2000 |
| | | RU 2158721 C2 | 10-11-2000 |
| | | SK 103996 A3 | 04-06-1997 |
| | | UA 32588 C2 | 15-02-2001 |
| | | US 5951736 A | 14-09-1999 |
| | | US 6066190 A | 23-05-2000 |
| | | WO 9522515 A1 | 24-08-1995 |
| WO 9958594 A1 | 18-11-1999 | AU 4260499 A | 29-11-1999 |
| | | DE 19821088 A1 | 18-11-1999 |
| | | EP 1090060 A1 | 11-04-2001 |
| | | JP 2002514670 A | 21-05-2002 |
| | | WO 9958594 A1 | 18-11-1999 |
| DE 19913475 A1 | 28-09-2000 | NONE | |
| DE 102013012498 A1 | 29-01-2015 | NONE | |
| US 2018208519 A1 | 26-07-2018 | AU 2016295632 A1 | 15-02-2018 |
| | | BR 112018001196 A2 | 11-09-2018 |
| | | CA 2993131 A1 | 26-01-2017 |
| | | CN 108025993 A | 11-05-2018 |
| | | EP 3325431 A1 | 30-05-2018 |
| | | TW 201710222 A | 16-03-2017 |
| | | US 2018208519 A1 | 26-07-2018 |
| | | WO 2017013572 A1 | 26-01-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- *Asian J. Chem.,* 2014, vol. 26, 883-886